(19) **Europäisches Patentamt European Patent Office Office européen des brevets**

(11) **EP 1 283 412 B1**

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(21) Anmeldenummer: **02011726.3**

(22) Anmeldetag: **27.05.2002**

(51) Int Cl.:
*G01F 23/296* (2006.01)     *G01F 23/284* (2006.01)
*G01F 25/00* (2006.01)

(54) **Verfahren zum Erfassen eines Befüllvorganges**

Method for detecting a filling process

Procédé de détection d'une opération de remplissage

(84) Benannte Vertragsstaaten:
**DE FR GB SE**

(30) Priorität: **09.08.2001 DE 10139242**

(43) Veröffentlichungstag der Anmeldung:
**12.02.2003 Patentblatt 2003/07**

(73) Patentinhaber: **VEGA Grieshaber KG**
**77709 Wolfach (DE)**

(72) Erfinder:
• **Laun, Robert**
**77756 Hausach (DE)**

• **Haas, Dieter**
**78730 Lauterbach (DE)**

(74) Vertreter: **Patentanwälte**
**Westphal, Mussgnug & Partner**
**Am Riettor 5**
**78048 Villingen-Schwenningen (DE)**

(56) Entgegenhaltungen:
**EP-A- 0 961 106     EP-A- 1 014 049**
**DE-A- 3 337 690     DE-A- 4 234 300**
**DE-A- 4 332 071     DE-C- 4 218 303**

EP 1 283 412 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren und eine Vorrichtung zum Erfassen eines Befüllvorgangs.

Zur Überwachung des Füllstands für fließ- oder schüttfähige Materialien werden häufig Sensoren eingesetzt, die ein Signal in den Behälter aussenden, aus dem Behälter zurückgeworfene Signale aufnehmen und durch eine Signalanalyse eine Abschätzung des Füllstandes des Behälters erlauben.

Diese Sensoren funktionieren befriedigend, solange die Füllstandsverhältnisse im Inneren des Behälters sich nicht zu stark ändern, so dass eine wohl definierte Oberfläche des Füllguts existiert, deren Beitrag zum Echosignal isoliert und ausgewertet werden kann. Eine solche Auswertung wird zwar erschwert durch Echobeiträge, die von den Wänden des Behälters oder Behälteranbauten zurückgeworfen werden, doch können diese Störechobeiträge im allgemeinen dadurch vom Echo des Füllgutspiegels unterschieden werden, dass erstere sich im Laufe der Zeit nur dann ändern, wenn die das Echo zurückwerfende Oberfläche entweder vom Füllgut überdeckt oder wieder freigegeben wird. Das Echo des Füllgutspiegels ist also von Störechos langfristig dadurch unterscheidbar, dass bei ersterem die Laufzeit des Echobeitrags langfristig variabel ist, wohingegen bei letzteren die Laufzeit des Echobeitrags unverändert bleibt und statt dessen die Amplitude variiert.

Wenn ein solcher Behälter befüllt wird, ändern sich die Echosignalverhältnisse. Durch Staub- bzw. Füllgutpartikel in der Luft kann es zu einer Dämpfung der Signale kommen. Die Amplitude der Störechosignale als auch das Echosignal des Füllgutspiegels ändern sich; Füllgut kann an den Behälterwänden haften bleiben oder von diesen abfallen, so dass Informationen über Störechobeiträge, die zu einem früheren Zeitpunkt gesammelt worden sind, während und nach dem Befüllen nicht mehr notwendigerweise gültig sein müssen. Insbesondere wenn die verwendeten Signale akustische Signale sind, kann das Geräusch des Befüllvorgangs sich dem Echosignal überlagern und Echobeiträge verdecken. Auch der Befüllstrom selber kann, wenn er von dem ausgesendeten Signal getroffen wird, Störechosignale liefern.

Alle diese Einflüsse führen dazu, dass die Füllstandsmessung anhand eines Echosignals unter Verwendung von Algorithmen, die befriedigende Ergebnisse liefern, bei laufender Befüllung unbrauchbare Ergebnisse liefern können. Um ständig über zuverlässige Füllstandsmesswerte zu verfügen, ist es daher notwendig, zur Füllstandsabschätzung aus dem Echosignal unterschiedliche Algorithmen oder Parameter einzusetzen, je nach dem, ob gerade ein Befüllvorgang stattfindet oder nicht.

Als Stand der Technik werden die DE 33 37 690, DE 43 32 071, EP-A-0 961 106, DE 42 34 300 A genannt.

Wenn die Auswertung der Echosignale automatisch in einer Auswertungseinheit vorgenommen werden soll, ist es daher erforderlich, dieser zusätzlich zum Echosignal auch eine Information darüber zuzuführen, ob gerade ein Befüllvorgang stattfindet oder nicht. Eine solche Information kann z. B. erhalten werden durch Abgreifen eines Stellsignals, das den offenen oder geschlossenen Zustand einer Einfüllklappe des Behälters steuert, von einer Steuereinrichtung der Einfüllklappe oder durch einen an der Klappe angeordneten Positionsgeber. In beiden Fällen ist es erforderlich, dass der Behälter bzw. dessen Steuereinrichtung zum Abgreifen des benötigten Signals vorbereitet sind oder dass an ihnen bauliche Änderungen vorgenommen werden.

Aufgabe der vorliegenden Erfindung ist, ein Verfahren zum Erfassen eines Befüllvorgangs in einem Behälter anzugeben, die solche Anforderungen an den Behälter nicht stellen.

Die Aufgabe wird gelöst durch ein Verfahren mit den Merkmalen des Patentanspruchs 1.

Ein erfindungsgemäßes Verfahren zum Betreiben eines Füllstandsmessgerätes zur Überwachung des Füllstandes von fließ- oder schüttfähigen Materialien in einem Behälter, wobei sich das Füllgut in einem unteren Bereich des Behälters weist folgende Schritte auf

   a) Aussenden eines Ultraschall- oder Mikrowellensignals in Richtung Füllgut und Aufzeichnen eines zeitlichen Verlaufs von zurückgeworfenen Echosignalen über eine vorgegebene Zeitspanne, bei nicht laufendem Befüllvorgang,

   b) Ermitteln mindestens eines insbesondere amplitudenabhängigen Parameters durch Addieren von Differenzen von an aufeinanderfolgenden Zeitpunkten aufgenommenen Messwerten der Amplitude aus den zurückgeworfenen Echosignalen, wobei eine Differenz nur dann beim Addieren berücksichtigt wird, wenn die Amplitude des späteren Messwerts höher ist als die des früheren,

   c) Festlegen eines Erwartungsbereiches anhand von Messungen des Parameters bei diversen Füllstandspegeln des Behälters, ohne laufenden Befüllvorgang,

   d) Aussenden des Signals in Richtung Füllgut und Vergleich des oder der Ermitteln des Parameters mit dem oder den in b) ermittelten Parametern und

   e) Feststellen eines laufenden Befüllvorgangs, wenn der oder die Parameter innerhalb eines vorgegebenen Abschnitts eines Weglängenbereiches außerhalb eines des Erwartungsbereichs liegt.

Um die Grenzen der Erwartungsbereiche zweckmäßig festzulegen, werden Messungen des Parameters durchgeführt, ohne dass ein Befüllvorgang stattfindet, und die Erwartungsbereiche werden anhand der so erhaltenen, für den Nicht-Befüllbetrieb des Behälters typischen Parameterwerte definiert.

Diese Messungen werden bei diversen Füllstandspegeln des Behälters durchgeführt Vorzugsweise generieren sich beim Einbau des Gerätes die Parameter im laufenden Betrieb selbständig.

Als Parameter geeignet ist das Ausmaß der Amplitudenschwankungen im zeitlichen Verlauf der Echosignale. Diese sind relativ gering, wenn die Echosignale von einem starken Störgeräusch des Befüllvorgangs überlagert sind bzw. die aus dem Behälter zurückgeworfenen Echosignale durch einen Füllgutstrahl gedämpft werden.

Ein solcher Parameter kann auf einfache Weise erhalten werden durch Addieren von Differenzen von an aufeinanderfolgenden Zeitpunkten aufgenommenen Messwerten der Amplitude der Echosignale.

Da die Echoamplitude im allgemeinen im Laufe der Zeit nach dem Aussenden des Signals abfällt, ist es zweckmäßig, beim Berechnen des Parameters nur diejenigen Differenzen zu addieren, bei denen die Amplitude des späteren Messwerts höher ist als die des früheren.

Weitere Merkmale und Vorteile der Erfindung ergeben sich aus der nachfolgenden Beschreibung von Ausführungsbeispielen mit Bezug auf die beigefügten Figuren. Es zeigen:

Fig. 1    einen schematischen Schnitt durch einen mit einer Füllstandsmessvorrichtung ausgestatteten Schüttgutbehälter;

Fig. 2    den zeitlichen Verlauf der Amplitude eines typischen Echosignals ohne Befüllung und während der Befüllung des Behälters; und

Fig. 3    den zeitlichen Verlauf eines Rauhheitsparameters des Echosignals, berechnet für eine Vielzahl von nacheinander erzeugten Echos.

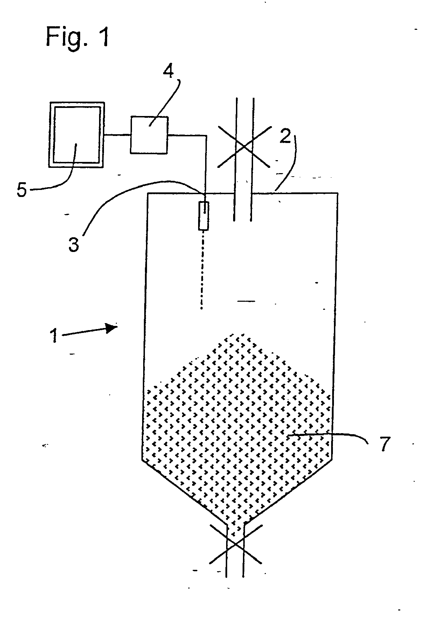

Fig. 1 zeigt in einem schematischen vertikalen Schnitt einen Behälter mit einer Füllstandsmessvorrichtung. Die Füllstandsmessvorrichtung umfasst in an sich bekannter Weise eine im Innern des Behälters 1 an dessen Decke 2 montierte Sender-/Empfängereinheit 3, eine mit der Sender- /Empfängereinheit 3 verbundene Auswerteeinheit 4 sowie eine Anzeigeeinheit 5, z. B. eine Bildröhre. Die Auswerteeinheit 4 kann als der Sender-/Empfängereinheit 3 zugeordneter, geeignet programmierter Mikroprozessor implementiert sein; es kann sich aber auch um einen unspezialisierten Computer handeln, der mit der Sender-/Empfängereinheit 3 über eine Schnittstelle (nicht dargestellt) kommuniziert und in der Lage ist, ein Programm auszuführen, das ein im folgenden noch genauer zu beschreibendes Verfahren realisiert. Die Sender-/Empfängereinheit 3 sendet ein Signal, insbesondere ein Ultraschallsignal, in den unteren Bereich des Behälters 1, wo sich ein zu erfassendes Füllgut 7 befindet, und empfängt ein von dem Füllgut 7 und von den Wänden des Behälters 1 zurückgeworfenes Echosignal.

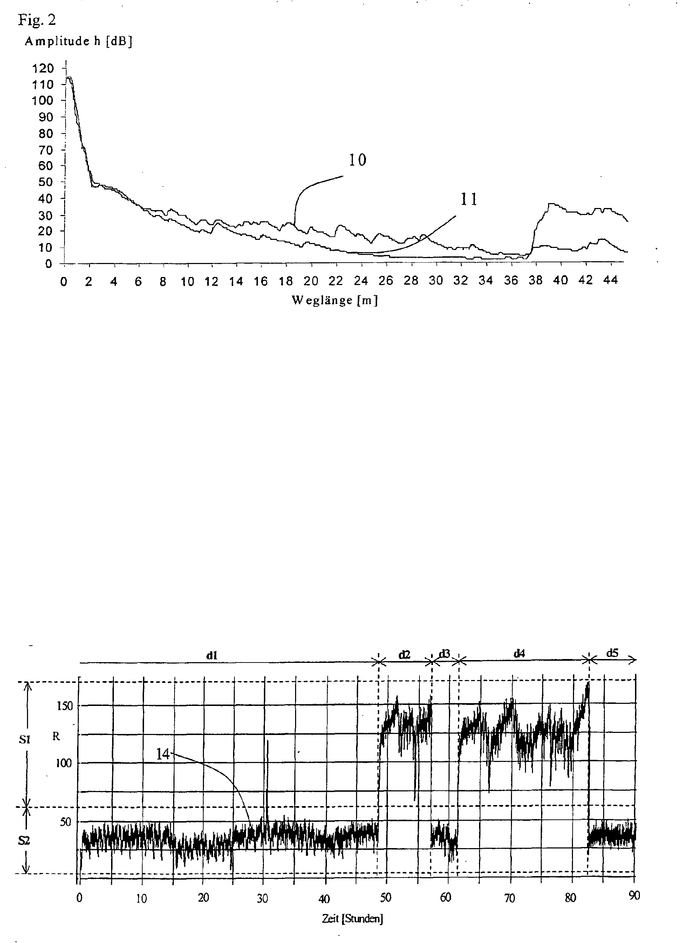

Fig. 2 ist ein Graph, der einen typischen Verlauf eines solchen Echosignals zeigt. Dabei ist an der Abszisse die der Laufzeit des Echosignals entsprechende zurückgelegte Weglänge in Metern und an der Ordinate die Amplitude des Echosignals in Dezibel aufgetragen. Zwei Kurven 10, 11 zeigen den typischen zeitlichen Verlauf eines Echosignals jeweils im Nicht-Befüllbetrieb des Behälters bzw. bei einem laufenden Befüllungsvorgang. Der Vergleich der zwei Kurven zeigt, dass der Signalamplitudenverlauf der dem Befüllungsvorgang entsprechenden Kurve 11 insgesamt niedriger ist und auch weniger Details aufweist.

Die unterschiedlichen Amplituden dieser zwei Kurven 10, 11 lassen sich in unterschiedlicher Weise zur Beurteilung des Vorliegens eines Befüllungsvorgangs nutzen.

Der Vergleich der Kurven 10 und 11 zeigt, dass im Fall des Behälters, an dem diese Kurven gemessen wurden, bei Weglängen von 16-32 m und von ca. 39-46 m deutliche Amplitudenunterschiede zwischen den zwei Kurven bestehen.

Eine weitere Möglichkeit zum Erfassen eine Befüllungsvorgangs durch Analyse der Echosignale ergibt sich aus der in Fig. 2 zu erkennenden relativen Detailarmut der Echosignalkurve 11 im Vergleich zu der Kurve 10. Man erkennt im Vergleich der zwei Kurven deutlich, dass eine Vielzahl von Peaks der Kurve 10 in der während der Befüllung aufgenommenen Kurve 11 schlicht nicht vorhanden sind, mit anderen Worten, dass die Kurve 10 eine deutlich stärke "Rauheit" aufweist als die Kurve 11.

Um diese Rauheit zu quantifizieren und vergleichen zu können, wird gemäß einer weiteren Ausgestaltung der Erfindung eine Vielzahl von Abtastwerten $h(t1)$, $h(t2)$, ... des Echosignals aufgenommen, wobei die Abtastzeitpunkte $t1$, $t2$, ... mit einer vorgegebenen Schrittweite $Dt$ aufeinanderfolgen, und für jedes Echosignal wird die Summe

$$R = \sum_i p(h(t_i) - h(t_{i-1}))$$

berechnet, wobei die Funktion $p(x)$ den Wert $x$ für positive $x$ und sonst den Wert 0 hat.

Fig. 3 zeigt eine Kurve 14, gebildet aus einer Folge von Werten dieser Summe $R$, die an einem Behälter im Laufe einer Zeit aufgenommen wurden, in denen sich Befüllungsvorgänge und Stadien ohne Befüllung des Behälters abwechselten. Man erkennt deutlich, dass die Werte der Summe $R$ in zwei deutlich von einander getrennten Wertebereichen S1, S2 liegen, je nachdem, ob ein Befüllungsvorgang läuft, wie in den Intervallen d1, d3, d5, oder nicht, wie in den Intervallen d2, d4.

Die oben als Kriterien für die Erkennung eines Befüllungsvorgangs in Betracht gezogenen Parameter punktuelle Amplitude, gemittelte Amplitude, Rauheit R sowie andere, hier nicht eigens erwähnte, können im Rahmen der vorliegenden Erfindung auch durch ihre zeitliche Ableitung im Laufe aufeinanderfolgender Messvorgänge ersetzt werden. So lässt sich zum Beispiel für die zeitliche Ableitung der Amplitude oder der Rauheit ein Erwartungsbereich angeben, der um Null liegt. Wenn die im Laufe aufeinanderfolgender Messvorgänge beobachtete Änderung des Parameters außerhalb des Erwartungsbereichs liegt, so lässt dies auf einen Befüllungsvorgang schließen.

**Patentansprüche**

1. Verfahren zum Betreiben eines Füllstandsmessgerätes zur Überwachung des Füllstandes von fließoder schüttfähigen Materialien in einem Behälter, wobei sich das Füllgut in einem unteren Bereich des Behälters befindet mit den Schritten

a) Aussenden eines Ultraschall- oder Mikrowellensignals in Richtung Füllgut und Aufzeichnen eines zeitlichen Verlaufs von zurückgeworfenen Echosignalen über eine vorgegebene Zeitspanne, bei nicht laufendem Befüllvorgang,
b) Ermitteln eines amplitudenabhängigen Parameters durch Addieren von Differenzen von an aufeinanderfolgenden Zeitpunkten aufgenommenen Messwerten der Amplitude aus den zurückgeworfenen Echosignalen, wobei eine Differenz nur dann beim Addieren berücksichtigt wird, wenn die Amplitude des späteren Messwerts höher ist als die des früheren,
c) Festlegen eines Erwartungsbereiches anhand von Messungen des Parameters bei diversen Füllstandspegeln des Behälters, ohne laufenden Befüllvorgang,
d) Aussenden des Signals in Richtung Füllgut und Ermitteln des Parameters
e) Feststellen eines laufenden Befüllvorgangs, wenn der Parameter außerhalb des Erwartungsbereichs liegt.

**Claims**

1. A method of operating a filling level measuring instrument for monitoring the filling level of flowable or pourable materials in a container, wherein the filled material is present in a lower region of the container, with the steps:

a) emitting an ultrasonic or microwave signal in the direction of the filled material and plotting a time pattern of reflected echo signals over a preset period of time, when the filling procedure is not in operation,

b) determining from the reflected echo signals an amplitude-dependent parameter by adding differences of measurement figures of the amplitude recorded at successive points in time, wherein a difference is taken into consideration in the addition only when the amplitude of the later measurement figure is higher than that of the earlier one,
c) setting a range of expectation with reference to measurements of the parameter in the case of diverse filling levels of the container, without the filling procedure being in operation,
d) emitting the signal in the direction of the filled material and determining the parameter,
e) setting a filling procedure in operation when the parameter is outside the range of expectation.

**Revendications**

1. Procédé de gestion d'un appareil de mesure d'un état de remplissage pour permettre de surveiller l'état de remplissage de matériaux fluides ou en vrac dans un récipient, le matériau de remplissage étant situé dans la zone inférieure de ce récipient, procédé comprenant les étapes consistant à :

a) émettre un signal ultrasonore ou microondes en direction du matériau de remplissage et enregistrer les variations chronologiques des signaux d'écho renvoyés pendant un laps de temps prédéfini alors que le procédé de remplissage n'est pas en cours,
b) déterminer un paramètre dépendant de l'amplitude en additionnant des différences de valeurs de mesure de l'amplitude prélevées à des instants successifs à partir des signaux d'écho renvoyés, une différence n'étant prise en considération lors de l'addition que lorsque l'amplitude de la valeur de mesure ultérieure est supérieure à celle de la valeur de masure antérieure,
c) fixer une plage attendue à partir de mesures du paramètre pour divers niveaux de remplissage du récipient, sans processus de remplissage en cours,
d) émettre le signal en direction du matériau de remplissage et déterminer le paramètre,
e) déterminer un processus de remplissage en cours lorsque le paramètre se situe à l'extérieur de la plage attendue.

## Fig. 1

Fig. 2

Amplitude h [dB]

120
110
100
90
80
70
60
50
40
30
20
10
0

0  2  4  6  8  10  12  14  16  18  20  22  24  26  28  30  32  34  36  38  40  42  44

10

11

Weglänge [m]

d1   d2  d3   d4   d5

S1   R

150

100

14

50

S2

0   10   20   30   40   50   60   70   80   90

Zeit [Stunden]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3337690
- DE 4332071

- EP 0961106 A
- DE 4234300 A